# EUROPÄISCHE PATENTSCHRIFT

(11) **EP 2 109 305 B1**
(45) Veröffentlichungstag und Bekanntmachung des Hinweises auf die Patenterteilung: **11.05.2011**
(21) Anmeldenummer: 09003992.6
(22) Anmeldetag: 20.03.2009
(51) Int. Cl.: H04N 5/073, H04N 5/232, H04N 7/52, H04N 7/18, H04L 7/00

(54) **Verfahren und Vorrichtung zur Synchronisation von Kamerasystemen**
Method and device for synchronising camera systems
Procédé et dispositif destinés à la synchronisation de systèmes de caméra

(30) Priorität: 08.04.2008 DE 102008017933
(43) Veröffentlichungstag der Anmeldung: 14.10.2009
(73) Patentinhaber: Baumer Optronic GmbH, 01454 Radeberg (DE)
(72) Erfinder: Ihlefeld, Joachim, 01067 Dresden (DE); Kunze, Carsten, 01328 Dresden (DE); Ölschläger, Thomas, 01099 Dresden (DE); Rädisch, Frank, 02929 Rothenburg (DE); Scharf, Dietmar, 01796 Pirna (DE); Vietze, Oliver, 8500 Frauenfeld (CH)
(74) Vertreter: Herden, Andreas F.

(56) Entgegenhaltungen:
- EP-B- 0 815 688
- US-A1- 2004 017 486
- US-A1- 2004 187 044
- US-A1- 2006 001 744

## Beschreibung

Für die automatische Bildverarbeitung spielt die Vernetzung von Kameras, peripheren Sensoren und Rechnern zu komplexen Systemen eine zunehmende Rolle. Die Kommunikation erfolgt über standardisierte Netzwerke, die bekanntesten sind Firewire IEEE1394 sowie Ethernet IEEE802.3. Für den Anschluß von Kameras stehen dann weitere Standards zur Verfügung, die bekanntesten sind DCAM und der von der AIA (Automated Imaging Association) veröffentlichte GigE-Vision-™ Standard.

Neben der Bereitstellung einer hohen Bandbreite für die Bildübertragung ist die präzise zeitliche Synchronisation von Kameras, Beleuchtungseinheiten sowie weiteren Sensoren eine Grundvoraussetzung für eine hohe Performance.

In EP1793574 wird beispielhaft eine im Bereich Telekommunikation anwendbare Kommunikationsmethode beschrieben, in der über einen Triggerserver ein externes Signal in einem Netzwerk über einen broadcast call an einen definierten Teilnehmerkreis übertragen, von diesem quittiert und anschließend Verbindungen aufgenommen werden. Die beschriebene Methode ist jedoch für schnelle Reaktionszeiten ungeeignet.

Für industrielle Steuerungen werden Synchronisationsverfahren für Netzwerke beschrieben, die in Verbindung mit dem Standard IEEE1588 lokale, miteinander synchronisierte Echtzeituhren (real- time clock RTC) verwenden, wie dies z.B. in EP1484869 und EP1860520 der Fall ist. Im Betrieb wird das Triggersignal mit einer ausreichend hohen Vorhaltezeit und mit Angabe des gewünschten Triggerzeitpunktes an die Nodes übertragen. Dieses Verfahren setzt eine ausreichende Anzahl von RTC' s im System voraus und die Verwendung von geeigneten schnellen Protokollen voraus.

Für Systeme mit besonders hohen zeitlichen Anforderungen wurden Lösungen beschrieben, die durch spezielle Vorkehrungen - z.B eine Cachesteuerung - für ein kontinuierliches Senden von Datenpaketen ohne Lücken in einem festen Datenformat ein besonders geringes Jitter von zeitlich relevanten Informationen erreichen, z.B. EP1702245. Die zeitlich präzise gesendeten Datenpakete werden dann mit Hardware auf der Empfängerseite ausgewertet. Nachteil dieser Lösungen ist die geringe Flexibilität, da ein Sendekanal ständig belegt ist.

Aus der EP 1 554 839 ist ferner ein Systementwurf bekannt, der in einem Echtzeit- und einem Nichtechtzeitmode Daten austauscht und die zeitliche Verteilung der beiden Betriebsarten in Echtzeit berechnet und anpasst. Dies setzt jedoch ein vorher bekanntes Verhalten der Busteilnehmer voraus.

In der EP B 0 815 688 B1 wird ein System zum maschinellen Sehen mit einer Vielzahl von Videokameras beschrieben, bei welchem ein Hauptprozessor vorgesehen ist, welcher die Videosignale der Kameras empfängt und verarbeitet. Die Kommunikationsmittel sind für Zwei-Wege-Kommunikation ausgelegt, um die Videosignale, Gerätesteuersignale und Triggersignale zu übertragen.

In der Druckschrift US 2004/187044 A1 wird ein Verfahren zur Synchronisierung eines oder mehrerer Geräte beschrieben, die an einem zweiten Bus angeschlossen sind. Dazu werden Unterschiede von Timing-signalen eines Master-Busses und einem oder mehreren Slave-Bussen bestimmt. An die Slave-Busse werden dann Timing-Signale versendet, welche Zeitabstände oder relative Zeitverschiebungen zwischen dem Master- und dem jeweiligen Slave-Bus anzeigen.

Die Aufgabe der Erfindung besteht darin, für die Synchronisation von Bildverarbeitungssysteme in Netzwerken eine geeignete Architektur vorzuschlagen, die die genannten Nachteile vermeidet und sowohl eine schnelle Reaktion auf Triggerereignisse, als auch eine optimierte Übertragung hoher Datenvolumina mit nicht prädizierter Länge ermöglicht.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Die Aufgabe der Erfindung wird dadurch gelöst, dass die im Netzwerk für Bildverarbeitungsaufgaben spezifizierten Geräte über zwei parallel angeordnete duplexfähige Kanäle verfügen:
- einen auf kurze Reaktionszeiten für kurze Telegramme optimierten logischen Steuerkanal
- und einen auf hohen Datendurchsatz optimierten zweiten logischen Datenkanal
wobei der Steuerkanal als Proxy ausgeprägt ist und durch Hardware in Echtzeit gesteuert wird und der Datenkanal konstante oder variable auf Datendurchsatz optimierte Formate, wie z.B. Jumboframes verwendet.

Bildverarbeitungssysteme benötigen in der Regel relativ kurze, zeitlich präzise Steuerinformation, z.B. den Startimpuls für ein Bild (Trigger für den Beginn der Belichtungszeit), der bei Verwendung von Impulsbeleuchtungen zeitlich parallel auch die Beleuchtung einschaltet. Hierbei ist wichtig, dass insbesondere bei Mehrkamerasystemen der Trigger innerhalb einer festgelegten Zeittoleranz übertragen wird. Die exakten Toleranzen hängen von der lösenden Applikation ab. In der Regel ist der zeitliche Jitter zwischen den Triggersignalen der Kameras und Beleuchtungseinrichtungen untereinander kritischer als ein einheitlicher Offset für die Gesamtheit sämtlicher Signale, z.B. des gemeinsamen Startsignals einer SPS. Deshalb ergibt sich eine besonders günstige Architektur, wenn das Synchronisationsmodul lokal z.B. über einen Switch, an die zu einer Gruppe gehörenden Geräte ein Broadcastsignal sendet, wobei jedes Gerät dieses Signal mit Hardware bei gleichen Zeitbedingungen auswertet. Die zeitliche Toleranz enthält einen für sämtliche Geräte annähernd gleichen Offset, der mit üblichen Bildverarbeitungsalgorithmen behandelt werden kann.

In größeren Netzwerken ist es sinnvoll, die Verzögerungszeit zwischen Synchronisationsmodulen und Kameras zu überwachen, da sie während des Betriebs schwanken können. Hierzu werden die typischen Delays und deren Varianz ermittelt, gespeichert und anschließend durch ein Error and Exception Handling ausgewertet.

Die weiteren Prozesse inclusive der Datenübertragung aus einem Bildspeicher bzw. - falls erforderlich - dem Ausschalten der Beleuchtung werden durch interne Statemachines ausgelöst und benötigen deshalb in der Regel keine zusätzlichen Signale.

Die zu übertragene Datenmenge ist abhängig von den gewählten Betriebsmodi der Kamera sowie bei Einsatz von Bildvorverarbeitungseinheiten auch vom Bildinhalt. Diese Information ist dem Steuerrechner (Host) nicht a priori bekannt. Deshalb ist es in der Regel nicht möglich, das Senden der Kameras von einem Host aus zeitlich exakt zu planen und dann zu steuern. Aus diesem Grund besteht ist es günstig, einen definierten Abbruch einer Übertragung mit der Option zu ermöglichen, den nicht übertragenen Rest zu verwerfen oder zu einem späteren Zeitpunkt aus dem Bildspeicher zu übertragen.

Gemäß der vorstehenden Darstellung sieht die Erfindung allgemein ein Verfahren zur Synchronisation von Kamerasystemen, beziehungsweise von Bildaufnahmen der Kameras über ein duplexfähiges Netzwerk.vor, bei welchem innerhalb des Netzwerks ein oder mehrere hardwaregestützte Synchronisationsmodule mit einem logischen Kanal eines ersten Typs eingesetzt werden, wobei das oder die Synchronisationsmodule Bildaufnahmesignale, insbesondere in Form von Triggertelegrammen über den logischen Kanal versenden. Die Triggertelegramme steuern dabei den Aufnahmezeitpunkt von Bildsensoren und werden dazu von an das Netzwerk angeschlossenen Bildaufnahmevorrichtungen empfangen. Unter Ansprechen auf den Empfang eines Bildaufnahmesignals nehmen dann die Bildaufnahmevorrichtungen jeweils zumindest ein Bild auf. Die Bilddaten werden anschließend von den Bildaufnahmevorrichtungen über einen logischen Kanal eines zweiten Typs über das Netzwerk versendet, um diese weiterverarbeiten zu können.

Entsprechend ist auch ein vernetztes Kamerasystem mit mehreren Bildaufnahmevorrichtungen vorgesehen, welches zur Durchführung des erfindungsgemäßen Verfahrens ausgebildet ist. Das Kamerasystem umfasst ein duplexfähiges Netzwerk, ein oder mehrere an das duplexfähige Netzwerk angeschlossene hardwaregestützte Synchronisationsmodule mit einem logischen Kanal eines ersten Typs, wobei das oder die Synchronisationsmodule dazu eingerichtet sind, Bildaufnahmesignale über den logischen Kanal des ersten Typs zu versenden, die den Aufnahmezeitpunkt von Bildsensoren der Bildaufnahmevorrichtungen steuern, wobei die Bildaufnahmesignale von den Bildaufnahmevorrichtungen empfangen werden, und wobei die Bildaufnahmevorrichtungen unter Ansprechen auf den Empfang eines Bildaufnahmesignals ein Bild aufnehmen, und wobei die Bildaufnahmevorrichtungen dazu eingerichtet sind, aufgenommene Bilddaten anschließend über einen logischen Kanal eines zweiten Typs über das Netzwerk zu versenden.

Externe Schaltsignale können über jeweils einen oder mehrere Triggereingänge oder Ausgänge des oder der Synchronisationsmodule empfangen oder gesendet werden. Vom Synchronisationsmodul abgegebenen Schaltsignale können zum Auslösen einer Kamera, sowie auch zum Auslösen eines Blitzes oder allgemein einer Beleuchtungseinrichtung eingesetzt werden. Die erfindungsgemäß realisierte synchronisierte Aufnahme mit mehreren Kameras ist besonders vorteilhaft in Verbindung mit einer Beleuchtung durch ein oder mehrere durch externe Schaltsignale getriggerte Blitzlichter, da auf diese Weise kleinere Jitter in den Laufzeiten über das Netzwerk oder allgemein geringfügige zeitliche Unterschiede zwischen den Aufnahmen verschiedener Kameras ausgeglichen werden können.

Ebenso kann ein Triggersignal an einen Triggereingang eines Synchronisationsmoduls gegeben werden, worauf das Synchronisationsmodul im Ansprechen darauf zumindest ein Bildaufnahmesignal über das Netzwerk versendet. Sowohl die vorstehend genannten Triggereingänge, als auch die Triggerausgänge können insbesondere externe, beziehungsweise zusätzliche Anschlüsse sein, die also nicht Anschlüsse am duplexfähigen Netzwerk sind.

Das Auslösen der einen oder mehreren Kameras erfolgt damit also ereignisgesteuert. Beispielsweise kann das Triggersignal von einer Lichtschranke ausgelöst werden, wenn als Ereignis die Unterbrechung des Lichtstrahls durch ein aufzunehmendes Objekt erfolgt. Das Triggersignal wird auf den externen Triggereingang des Synchronisationsmoduls gegeben, woraufhin das Synchronisationsmodul ein Triggertelegramm über den ersten logischen Kanal versendet. Das Triggertelegramm löst dann in einer oder mehreren an das Netzwerk angeschlossenen Kameras die Bildaufnahme aus.

Besonders günstig ist es in Bezug auf eine verzögerungsfreie oder wenigstens verzögerungsarme Ansteuerung der Kameras, wenn Synchronisationsmodul und Kamera für jede Datenrichtung zwei logische Kanäle besitzen, welche sich nach ihrer Priorität unterscheiden.

Ein erster der beiden logischen Kanäle weist dazu eine erste Priorität für Synchronisationssignale und ein zweiter Kanal für die Übertragung von Bilddaten der beiden logischen Kanäle eine zweite Priorität auf. Der Kanal mit der ersten Priorität kann so die sofortige Informationsübertragung zu jeder Zeit gewährleisten, insbesondere dadurch daß eine Übertragung des zweiten Kanals mit der zweiten Priorität hierfür verzögerungsfrei unterbrochen werden kann, so daß für den ersten Kanal eine Echtzeitfähigkeit gegeben ist. Der zweite Kanal stellt vorzugsweise hohe Datenraten entsprechend der Möglichkeiten der Kanalkapazität des physischen Mediums zu Verfügung, kann jedoch im Gegenzug dazu zu jedem Zeitpunkt für eine Sync-Informationsübertragung mit der ersten Priorität unterbrochen werden, so daß eine Echtzeitfähigkeit auf diesem Kanal nicht vorhanden ist.

Insbesondere bei komplexeren Architekturen des Netzwerks kann es von Vorteil sein, wenn die Synchronisationsmodule mit einem Speicher ausgestattet sind, in dem eine oder mehrere Laufzeiten oder Delays zwischen verschiedenen Synchronisationsmodulen des Systems und oder deren Varianz abgelegt sind und dass unter Kenntnis dieser Laufzeiten mittels einer Recheneinrichtung eine Verzögerung für die Bildaufnahme berechnet oder übertragen wird. Sind die Laufzeiten zu verschiedenen Kameras unterschiedlich, so kann dies von den Kameras bei der Bildaufnahme und/oder von einem Synchronisationsmodul für den Zeitpunkt des Versendens eines Bildaufnahmesignals, beziehungsweise eines Triggertelegramms über das Netzwerk berücksichtigt werden.

In Weiterbildung dieser Ausführungsform der Erfindung kann aus den gemessenen typischen Verzögerungszeiten von Punktzu Punkt- Verbindungen eine Verzögerungsmatrix gebildet werden welche die Verzögerung zwischen beliebigen Triggerquellen und Kameras beschreibt, so dass nach Eintreffen eines Triggersignals diejenige Verzögerung ausgewählt werden kann, die ein optimales Jitter, beziehungsweise möglichst kleine Zeitdifferenzen bei den Aufnahmen durch die Kameras gewährleistet.

Weiterhin können die Synchronisationsmodule teilweise oder vollständig auch mit Echtzeituhren oder Zählern ausgestattet sein, die über den/einen Heartbeat des Host unter Berücksichtigung des Delays zwischen Host und Synchronisationsmodul gestellt werden. Es bietet sich dann an, im Triggersignal die gemessene Uhrzeit oder ein äquivalentes, die Zeit repräsentierendes Datum des sendenden Synchronisationsmoduls zu übertragen. Das Zeitsignal kann dann im Empfänger ausgewertet werden, beispielsweise durch Addition eines Offsets. Die Aufnahme wird dann erst nach dem ermittelten Zeitoffset ausgelöst.

Beispielsweise kann das Delay in einfacher Weise anhand der halben mittleren Zeitdifferenz zwischen Senden und dem Empfang einer Quittung, insbesondere bei kritischen Netzen mit hohen, instabilen Verzögerungszeiten auch durch Mittelung über mehrere solche Ereignisse ermittelt werden.

Besonders bei komplexeren Netzarchitekturen ist es weiterhin günstig, wenn echtzeitkritische Kamerasteuersignale oder Triggersignale über das Netzwerk nicht an die Kamera sondern indirekt an den Synchronisationsmodul als Triggereinrichtung gesendet und dort nach Priorität gefiltert und an eine Kamera oder eine ausgewählte Gruppe von Kameras weitergeleitet werden.

Gemäß noch einer Weiterbildung der Erfindung können eine oder mehrere Kameras dazu ausgebildet sein, die Bereitschaft für eine neue Bildaufnahme oder das Ende der Bilddatenübertragung, vorzugsweise als echtzeitkritisches Steuersignal über das Netzwerk an ein Synchronisationsmodul zu übertragen. Das Synchronisationsmodul kann anhand dessen erkennen, daß eine verzögerungsfreie Bildaufnahme nun möglich ist, ohne dass eine Übertragung von Bilddaten durch die Kamera abgebrochen werden muss. Diese Ausführungsform der Erfindung ist insbesondere dann günstig, wenn es vorrangig auf die Gleichzeitigkeit der Bildaufnahmen, weniger vorrangig aber auf den absoluten Zeitpunkt der Aufnahme ankommt.

Weiterhin kann es günstig sein, wenn das Synchronisationsmodul dazu ausgebildet ist, ein Signal zum Abbruch einer Bildübertragung und / oder ein weiteres Signal zur wiederholten Übertragung eines Teils eines abgebrochenen Bildes aus dem Bildspeicher einer Kamera an diese zu senden. Ein separates Signal zum Abbruch der Bildübertragung kann dann kurz vor dem Versenden eines Triggersignals, beziehungsweise Bildaufnahmesignals über den ersten logischen Kanal versendet werden. Damit wird der Netzwerk-Verkehr während des Übertragens des Bildaufnahmesignals und somit auch die Gefahr eines Datenverlustes reduziert.

Die Erfindung wird nachfolgend anhand von Ausführungsbeispielen und unter Bezugnahme auf die beigefügten Zeichnungen näher erläutert. Dabei bezeichnen gleiche Bezugszeichen in verschiedenen Figuren auf gleiche oder entsprechende Elemente.

Es zeigen:
- Fig. 1: ein Schema eines ersten Ausführungsbeispiels eines vernetzten Kamerasystems,
- Fig. 2: den Ablauf einer Triggersequenz,
- Fig. 3: den Ablauf einer Echtzeit-Quittierungssequenz,
- Fig. 4: ein Ausführungsbeispiel eines System, bei welchem die Synchronisationsmodule mit Speicher ausgestattet sind,
- Fig. 5: ein Ausführungsbeispiel, bei welchem die Verzögerungszeiten und der Jitter zwischen den Netzwerkkomponenten für den Bildaufnahmezeitpunkt berücksichtigt werden,
- Fig 6: eine schematische Darstellung der Synchronisation von Echtzeituhren, und
- Fig. 7: anhand von Elementen des vernetzten Kamerasystems das Prinzip der Steuerdaten-Umleitung.

### Ausführungsbeispiel 1:

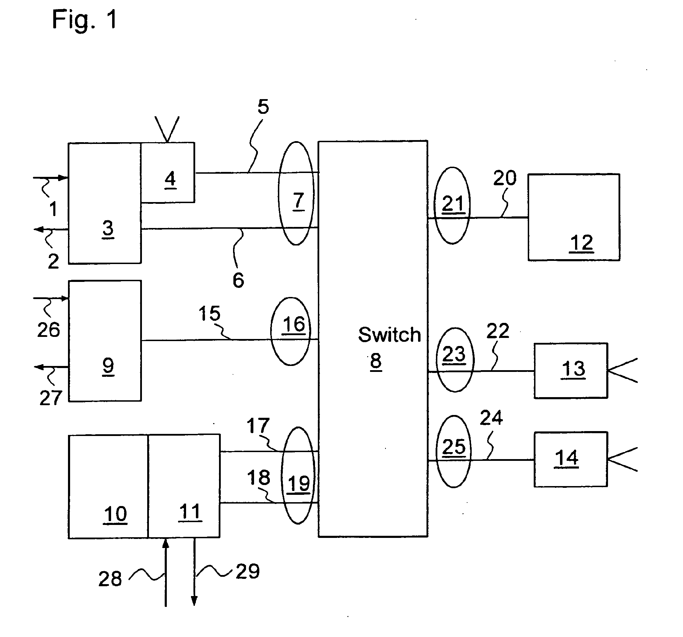

Fig. 1 zeigt beispielhaft eine typische Realisierung eines Kameranetzwerkes. Es werden im folgenden die für Ethernet typischen Bezeichnungen gewählt. Es ist dem Fachmann aber ersichtlich, daß das Ausführungsbeispiel für andere duplexfähige Netzwerke (IEEE1394 etc.) entsprechend anwendbar ist.

### Switches und Hubs:

Ein Ethernet Hub ist ein Multiport Repeater ohne Intelligenz zur Verbindung von Ethernet-Geräten. Hubs sind sehr schnell, da die Pakete weder gespeichert noch weitergeleitet werden. Man spricht bei einem Hub von einem "shared" Ethernet, d.h. es kann zu einem Zeitpunkt immer nur genau ein Gerät senden, alle anderen Geräte müssen während dieser Zeit warten. Die Laufzeiten sind selbst bei wenig ausgelasteten Netzen nicht mehr vorhersagbar. Hubs sind aus diesem Grund nicht bevorzugt, um die Netzwerkkomponenten miteinander zu verschalten.

Es werden daher mindestens Switching Hubs (Switches) bevorzugt. Ein Switch untersucht jeden Ethernet Frame bezüglich seiner enthaltenen Zieladresse und leitet ihn gezielt an den entsprechenden Port weiter. Dadurch sinkt die Netzwerklast und Kollisionen werden vermieden (im Vollduplexbetrieb). Auf diese Weise wird jedem Kanal die ganze Bandbreite des Switch zur Verfügung gestellt und Netzwerkgeräte müssen nicht mehr warten. Zwar entsteht durch den Switch eine Verzögerung in der Signalweiterleitung, allerdings ist dieses zusätzliche durch die Switchlogik verursachte Delay im allgemeinen konstant und dadurch berechenbar.

### Netzarchitekturen:

Es ist grundsätzlich möglich, Switches beliebig zu kaskadieren. Dabei sollte aber beachtet werden dass die Store&Forward-Funktion des Switches die Weiterleitung verzögert. Diese Switch-Verweilzeiten addieren sich und stellen in Abhängigkeit von den Anforderungen der jeweiligen Applikation die begrenzende Eigenschaft einer Netzwerkwerktopologie dar.

Sofern sogenannte Managed Switches benutzt werden und diese die Protokolle RSTP oder STP beherrschen, können beliebige Netzwerktopologien realisiert werden. (RSTP, Rapid Spanning Tree Protocol)

Die Synchronisationsnachricht wird als TCP/IP konformes Packet durch das SYNC Modul versendet. Dieses Paket kann dabei als Unicast, Multicast oder Broadcast versendet werden. Der optimale Jitter wird durch die Prioritätssteuerung des SYNC Moduls und durch eine auf IEEE1588 basierende Zeitsynchronisation sichergestellt.

### SYNC-Modul Prioritätssteuerung:

Die Prioritätsteuerung beruht darauf, dass der gesamte Datenstrom welcher sich in Richtung zur Kamera bewegt über das SYNC Modul geleitet wird. Dabei werden Synchronisationsnachrichten mit höchster Priorität in Hardware behandelt. Alle anderen Steuerdaten werden nachrangig behandelt.

Technologien wie VLANs, QoS oder Priority-Queues können dabei weiterhin eingesetzt werden, sind aber nicht zwingend erforderlich.

Fig. 1 zeigt ein Schema eines ersten Ausführungsbeispiels eines vernetzten Kamerasystems. In Fig. 1 bezeichnen die Bezugszeichen 1, 26, 28 jeweils einen Triggereingang, die Bezugszeichen 2, 27 und 29 jeweils einen Signal- oder Triggerausgang, die Bezugszeichen 3, 9 und 11 jeweils ein Synchronisationsmodul, die Bezugszeichen 4, 13 und 14 jeweils eine Kameraeinheit, die Bezugszeichen 5, 20 und 24 jeweils einen logischen Kanal mit hoher Datenrate, die Bezugszeichen 6, 15 und 18 jeweils einen logischen Kanal mit hoher Priorität oder Echtzeitfähigkeit, die Bezugszeichen 7, 16, 19, 21, 23, 25 jeweils eine physikalische Ethernet-Verbindung, beispielsweise ein Ethernet-Netzwerkkabel, das Bezugszeichen 8 einen Switch, und das Bezugszeichen 10 einen Rechner für die Verarbeitung der Bilddaten, beispielsweise einen PC.

In Fig. 1 sind drei verschiedene Ausführungsformen von Synchronisationseinheiten gezeigt:

Das Synchronisationsmodul 3 ist an der Kamera 4 angeschlossen oder in der Kamera 4 integriert.

Das Synchronisationsmodul 3 ist dazu beispielsweise mit in der Kamera vorhandenen Hardwarestrukturen realisierbar. Eine Signalisierung am vorhandenen Triggereingang 1 löst das Senden des Triggerkommandos an das Netzwerk aus. Da unmittelbar nach einem Triggersignal noch keine Bildübertragung stattfindet, tritt bei gemeinsamer Nutzung des Interfaces für Trigger und Bilddatentransport keine zusätzliche Verzögerung auf. Das Synchronisationsmodul 3 weist neben dem Triggereingang 1 noch einen Triggerausgang auf, über welchen ein Schaltsignal an ein externes, insbesondere nicht mit dem Netzwerk verbundenes Gerät gesendet werden kann. Beispielsweise kann an den Triggerausgang 2 ein Blitzlicht angeschlossen werden, mit welchen ein Blitz zur Beleuchtung bei der Bildaufnahme erzeugt wird.

Das Synchronisationsmodul 9 ist dagegen als externes Gerät ausgeführt:

Bei dieser Ausführungsform besitzt das Gerät einen oder mehrere Triggerein- und/oder Ausgänge. Es kann aufgrund seines mechanischen und elektrischen Interfaces optimal in das Bildverarbeitungssystem integriert werden. Bei dem in Fig. 1 gezeigten Beispiel weist das Synchronisationsmodul jeweils einen Triggereingang 26 und einen Triggerausgang 27 für Signale von, beziehungsweise an externe Elemente auf. Beispielsweise kann ein elektrisches Signal durch eine Lichtschranke oder einen anderen Sensor ausgelöst und an den Triggereingang 26 gegeben werden. Der Triggerausgang 27 kann wie der Triggerausgang 2 beispielsweise zum Anschluß eines Blitzlichts verwendet werden.

Das Synchronisationsmodul 11 mit Triggereingang 28 und Triggerausgang 29 schließlich ist als Bestandteil oder Modul eines PCs/Embedded Systems 10 ausgeführt.

Bei Integration in ein Rechnersystem bildet sich das Synchronisationsmodul 11 nach außen vorzugsweise als eigenständiges externes Gerät ab. Sind mehrere Netzwerkinterfaces vorhanden, wird kein Switch 8 benötigt.

Mittels einer Netzwerkarchitektur, wie sie in Fig. 1 gezeigt ist, kann die Bildaufnahme der Kameras 4, 13, 14 synchronisiert werden, indem eines der Synchronisationsmodule 3, 9, 11 ein Bildaufnahmesignal jeweils über den jeweils zugeordneten logischen Kanal 6, 15, 18, mit hoher Priorität versendet. Das über das Netzwerk versendete Bildaufnahmesignal, beziehungsweise Bildaufnahmetelegramm löst in den Kameras bei Empfang die Bildaufnahme aus. Die Bilddaten werden anschließend von den Bildaufnahmevorrichtungen, beziehungsweise Kameraeinheiten 4, 13, 14 über den jeweiligen zugeordneten logischen Kanal hoher Datenrate, also einen der Kanäle 5, 22, 24 über das Netzwerk versendet und können dann vom Rechner 10 weiterverarbeitet werden.

Allgemein, ohne Beschränkung auf das in Fig. 1 gezeigte Beispiel können sich die logischen Kanäle jeweils in ihren IP-Adressen unterscheiden.

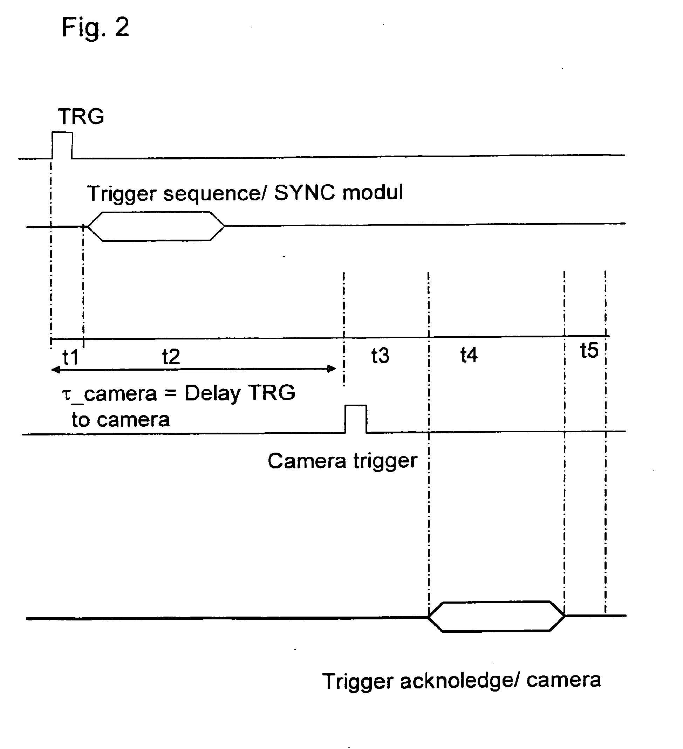

Fig. 2 zeigt den Ablauf einer Triggersequenz. Nach Auftreten eines Triggers vergeht eine Zeit t1 bis zum Senden des Triggerkommandos. Die Paketlaufzeit beträgt t2. Nach Auslösen eines Bildes wird nach der Verzögerung t3 eine Quittung von jeder getriggerten Kamera zum entsprechenden Synchronisationsmodul gesendet. Das Acknowledgetelegramm enthält einen Statuscode welcher zur Error und Exceptionbehandlung genutzt wird. Zur Behandlung verloren gegangener Synchronisationstelegramme wird ein AcknowledgeTimeout des Senders benutzt. Nach der Rücklaufzeit t4 trifft diese im Synchronisationsmodul ein. t5 ist die minimale Zeit bis ein weiterer Trigger angenommen werden kann.

Aus der Zeitdifferenz τ = t1 + t2 + t3 + t4 + t5 zwischen Aussenden des Kommandos und Eintreffen der Quittung lässt sich die Paketlaufzeit bestimmen. Insbesondere kann die Paketlaufzeit τ_camera als ungefähr gleich τ/2 angesetzt werden. Der Jitter kann aus der Standardabweichung der Laufzeiten berechnet werden.

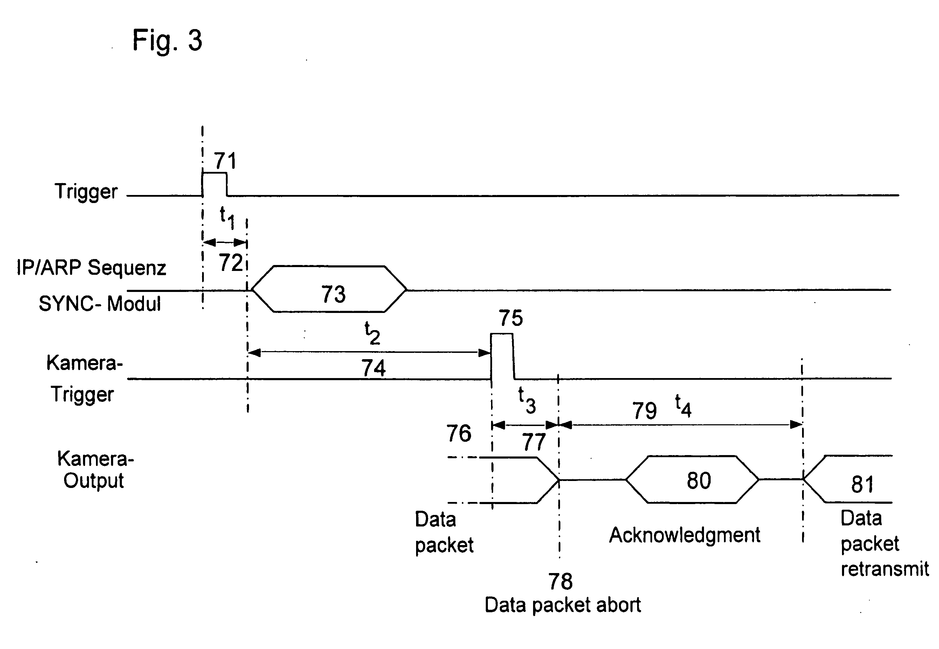

Der Ablauf einer Echtzeit-Quittierungssequenz ist in Fig. 3 dargestellt. In Fig. 3 bezeichnet das Bezugszeichen 71 das Hardware-Triggersignal, 72 den Delay zwischen Triggersignal und dem Start der Sequenz, beispielsweise einer IP/ARP-Sequenz, 73 die Dauer der Sequenz zur Übertragung eines Bildaufnahmetelegramms, 74 den Delay zwischen dem Start der Sequenz vom Synchronisationsmodul zur Kameraeinheit und dem Erkennen des Triggerkommandos, 75 das interne Kamera-Triggersignal, 76 ein Streaming-Packet hoher Datenrate, 77 das Delay zwischen dem internen Kamera-Triggersignal 75 und dem Zeitpunkt 78 des Abbruchs des Sendens des Datenpakets 76, 79 ein Zeitfenster für die Echtzeit-Übertragung der Quittung des Triggertelegramms, 80 die Dauer der von der Kamera zum Synchronisationsmodul gesendeten Sequenz zum Quittieren des Bildaufnahmetelegramms (beispielsweise ebenfalls in Form einer IP/ARP-Sequenz), und 81 das erneut gesendete Datenpaket mit den Daten entsprechend dem Datenpaket 76. Für das Senden des Quittungssignals 80 wird ein Zeitfenster 79 eingesetzt, in welchem der Kanal nicht von anderen logischen Verbindungen belegt wird. Das kann garantiert werden, wenn eine zum Zeitpunkt der Triggererkennung 75 stattfindende Datenübertragung 76 abgebrochen wird (Zeitpunkt 78). Die Quittungssignale der getriggerten Kameras können in der Zeit t₄ (Zeitfenster 79) zeitversetzt gesendet werden.

### Ausführungsbeispiel 2:

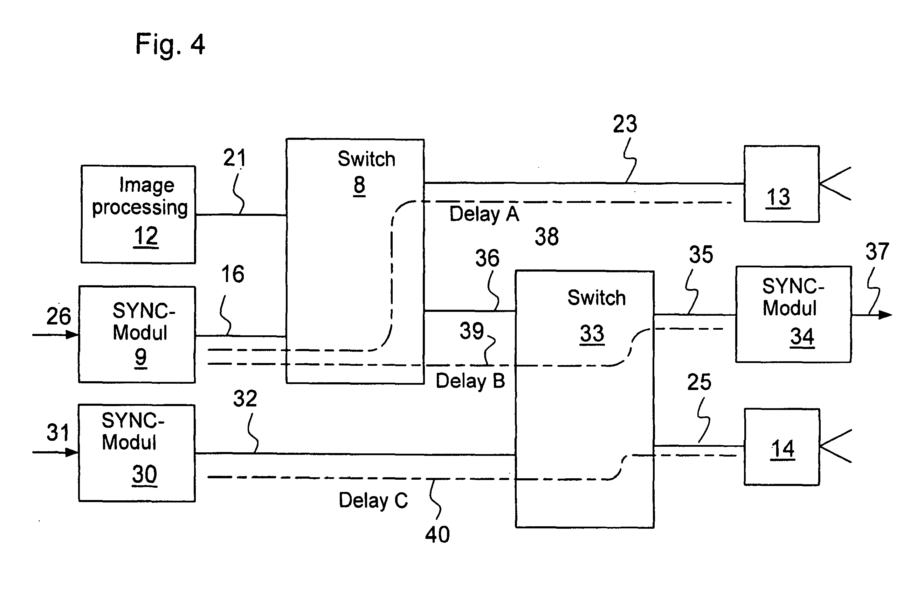

Fig. 4 zeigt ein System, in welchem Synchronisationsmodule mit Speicher eingesetzt werden, in denen die Laufzeiten zwischen verschiedenen Synchronisationsmodulen (38 ... 40) abgelegt sind. Unter Kenntnis dieser Laufzeiten kann eine vom Pfad abhängige Verzögerungsinformation im Triggerkommando mitübertragen werden.

In Fig. 4 bezeichnen die Bezugszeichen 8 einen Switch, 9, 30 und 34 jeweils ein Synchronisationsmodul, insbesondere als Stand-alone-Einheit ausgebildet, 12 eine Bildverarbeitungsvorrichtung, wie etwa einen PC, 13 und 14 jeweils als Stand-alone-Einheiten ausgebildete KameraEinheiten, 16, 21, 23, 25, 32, 35 und 36 physikalische Ethernet-Verbindungen, beziehungsweise Ethernet-Netzwerkkabel, 26 und 31 Triggereingänge, 37 einen Signalausgang, beispielsweise zum Auslösen eines Blitzes, 38 eine Verzögerung A, 39 eine Verzögerung B, und 40 eine Verzögerung C. Als Stand-Alone-Einheit wird im Sinne der Erfindung eine Einheit verstanden, die direkt an das Netzwerk angekoppelt ist.

### Ausführungsbeispiel 3:

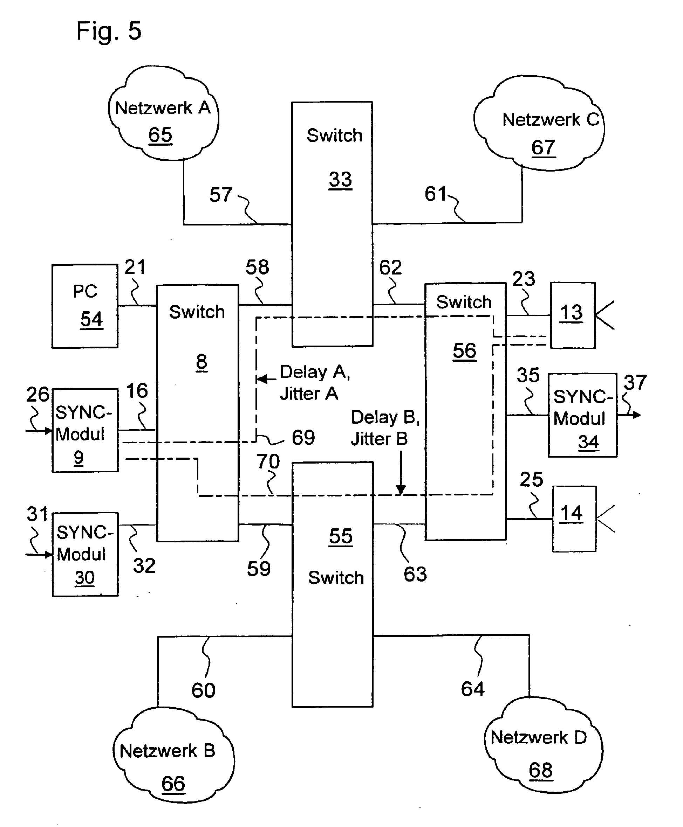

In Fig. 5 bezeichnen die Bezugszeichen 54 eine Bildverarbeitungsvorrichtung, wie etwa einen PC, 55 und 56 jeweils einen Switch, 57, 58, 59, 60, 61, 62, 63, 64 physikalische Ethernet-Verbindungen, beziehungsweise Ethernet-Netzwerkkabel, 65, 66, 67 und 68 mit den Switches 33, beziehungsweise 35 verbundene Netzwerke, 69 einen logischen Pfad mit einem Delay A und einem Jitter A, und 70 einen logischen Pfad mit einem Delay B und einem Jitter B

In Fig. 5 ist ein Netzwerk dargestellt, in welchem die Verzögerungszeiten und der Jitter zwischen den Netzwerkkomponenten bekannt sind (z.B. Delay und Jitter zwischen Switch (8) und Switch (33)) und in Matrixform in den Synchronisationsmodulen 9, 30, 34 gespeichert werden. Die entsprechenden Zeiten für eine Ende-zu-Ende-Verbindung (z.B. Pfad (69), bestehend aus den Abschnitten (9,8), (8,33), (33,65), (56,13)) lassen sich aus der Summe der Zeiten der Abschnitte berechnen. Sind für eine Ende-zu-Ende-Verbindung zwei Pfade möglich, kann anhand der Matrix derjenige Pfad ausgewählt werden, welcher für den Anwendungsfall besser geeignet ist.

### Ausführungsbeispiel 4:

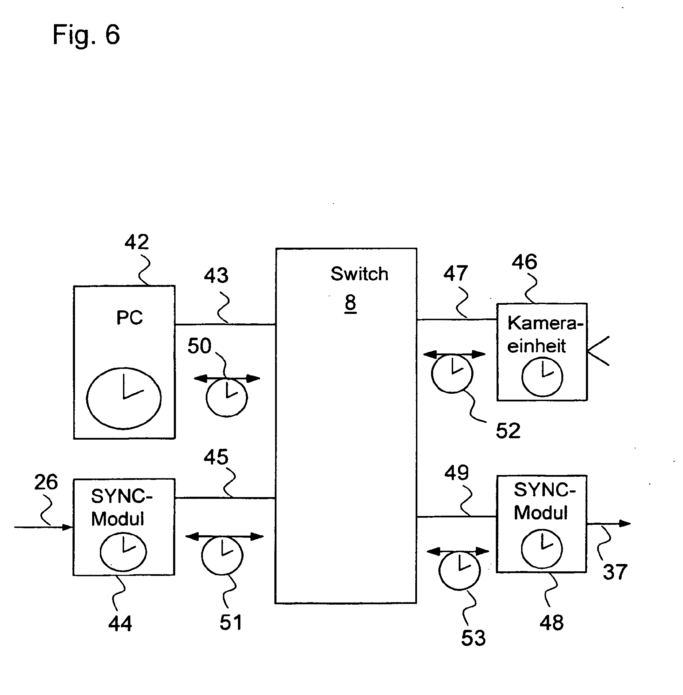

Es wird auf Fig. 6 Bezug genommen. In Fig. 6 bezeichnen die Bezugszeichen 8 einen Switch, 26 einen Triggereingang, 37 einen Triggerausgang, 43, 45, 47 und 49 physikalische Ethernet-Verbindungen, beziehungsweise Ethernet-Netzwerkkabel, 44 und 48 vorzugsweise als Stand-Alone-Einheiten ausgebildete Synchronisationsmodule, 46 eine vorzugsweise als Stand-Alone-Einheitvorzugsweise als Stand-Alone-Einheit ausgebildete Kameraeinheit. Die Uhrsymbole 50, 51, 52, 53 symbolisieren jeweils einen Austausch, beziehungsweise eine Aktualisierung der Systemzeit. Dieser Austausch wird nachfolgend beschrieben.

Die Synchronisation der Echtzeituhren aller Teilnehmer erfolgt nach dem IEEE1588 Standard, auch "Precision Clock Synchronisation Protocol for Networked Measurment and Control Systems" oder "PTP" genannt.
Dabei sendet eine Masteruhr ein erstes "SYNC" Telegramm. Dieses Telegramm beinhaltet die geschätzte Sendezeit. In einem zweiten "Follow up" Telegramm wird die genaue Absendezeit nachgeschickt. Auf der Empfängerseite kann dann mittels der eigenen Uhr die Zeitdifferenz zwischen beiden Uhren berechnet werden. In einem weiteren Übertragungsvorgang wird die Telegrammlaufzeit ermittelt. Mit dieser Delayzeit ist der Empfänger in der Lage seine Uhr entsprechend zu korrigieren und der aktuellen Buslaufzeit anzupassen.

Die Masteruhr, beziehungsweise deren Zeit kann beispielsweise vom PC 42 bereitgestellt werden. Demgemäß werden bei dem in Fig. 6 gezeigten Beispiel zunächst die Zeiten der Kameraeinheit 46 und dem PC 42 synchronisiert, der Switch 8 weist ein konstantes Delay auf. Nach diesem Austausch 50 und 52, der wie vorstehend durchgeführt wird, erfolgen ausgehend PC 41 weitere Austäusche 50 und 51, sowie 50 und 53 mit den Synchronisationsmodulen 44, 48.

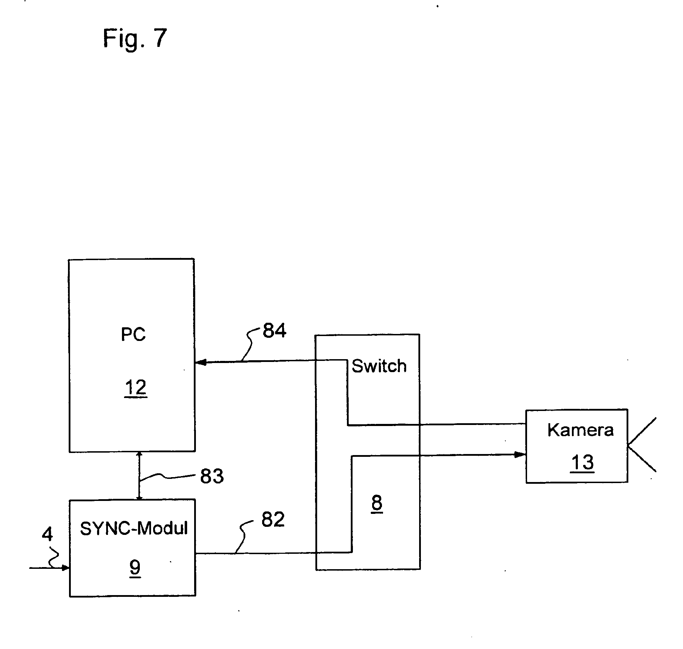

In Fig. 7 ist das Prinzip der Steuerdaten-Umleitung dargestellt. Der PC 12 setzt GigE- Steuerkommandos, darunter Heartbeatkommandos an das Synchronisationsmodul 9 über die Verbindung 83 ab. Das SYNC Modul nimmt eine Synchronisierung der Steuerdaten und der Triggerkommandos vor und leitet diese über Kanal 82 an die Kamera 13 weiter. Die Kamera 13 sendet zeitlich entkoppelt die Bilddaten über Kanal 84 an den PC 12.

## Patentansprüche

1. Verfahren zur Synchronisation von Kamerasystemen über ein duplexfähiges Netzwerk, bei welchem innerhalb des Netzwerks hardwaregestützte Synchronisationsmodule mit einem logischen Kanal eines ersten Typs eingesetzt werden, wobei die Synchronisationsmodule Bildaufnahmesignale über den logischen Kanal versenden, die den Aufnahmezeitpunkt von Bildsensoren steuern, wobei die Bildaufnahmesignale von Bildaufnahmevorrichtungen empfangen werden, und wobei die Bildaufnahmevorrichtungen unter Ansprechen auf den Empfang eines Bildaufnahmesignals jeweils ein Bild aufnehmen, und wobei die Bilddaten anschließend von den Bildaufnahmevorrichtungen über einen logischen Kanal eines zweiten Typs über das Netzwerk versendet werden, **dadurch gekennzeichnet, dass** aus gemessenen typischen Verzögerungszeiten von Punkt- zu Punkt-Verbindungen eine Verzögerungsmatrix gebildet wird, die die Verzögerung zwischen beliebigen Triggerquellen und Kameras beschreibt, so dass nach Eintreffen eines Triggersignals diejenige Verzögerung ausgewählt wird die ein optimales Jitter bei den Aufnahmen durch die Kameras gewährleistet.

2. Verfahren gemäß dem vorstehenden Anspruch, **dadurch gekennzeichnet, daß** Schaltsignale über jeweils einen oder mehrere Ausgänge eines Synchronisationsmoduls empfangen oder gesendet werden.

3. Verfahren gemäß einem der vorstehenden Ansprüche, weiter **dadurch gekennzeichnet, daß** ein Triggersignal an einen Triggereingang eines Synchronisationsmoduls gegeben wird, worauf das Synchronisationsmodul im Ansprechen darauf zumindest ein Bildaufnahmesignal über das Netzwerk versendet.

4. Verfahren nach einem der vorstehenden Ansprüche, weiter **gekennzeichnet dadurch, dass** Synchronisationsmodul und Kamera für jede Datenrichtung zwei logische Kanäle besitzen, welche sich nach ihrer Priorität unterscheiden.

5. Verfahren gemäß dem vorstehenden Anspruch, weiter **dadurch gekennzeichnet, daß** ein erster der beiden logischen Kanäle eine erste Priorität für Synchronisätionssignale und ein zweiter Kanal für die Übertragung von Bilddaten der beiden logischen Kanäle eine zweite Priorität aufweist, wobei der Kanal mit der ersten die sofortige Informationsübertragung zu jeder Zeit gewährleistet und eine Übertragung des zweiten Kanals mit der zweiten Priorität hierfür verzögerungsfrei unterbrochen werden kann, so daß für den ersten Kanal eine Echtzeitfähigkeit gegeben ist.

6. Verfahren nach einem der vorstehenden Ansprüche, weiter **gekennzeichnet dadurch, dass** die Synchronisationsmodule mit einem Speicher ausgestattet sind, in dem eine oder mehrere Laufzeiten oder Delays zwischen verschiedenen Synchronisationsmodulen des Systems und oder deren Varianz abgelegt sind und dass unter Kenntnis dieser Laufzeiten mittels einer Recheneinrichtung eine Verzögerung für die Bildaufnahme berechnet und übertragen wird.

7. Verfahren nach einem der vorstehenden Ansprüche, weiter **gekennzeichnet dadurch, dass** die Synchronisationsmodule teilweise oder vollständig mit Echtzeituhren oder Zählern ausgestattet sind, die über einen Heartbeat eines Host unter Berücksichtigung des Delays zwischen Host und Synchronisationsmodul gestellt werden, und dass im Triggersignal die gemessene Uhrzeit des sendenden Synchronisationsmoduls übertragen und im Empfänger ausgewertet wird.

8. Verfahren nach einem der vorstehenden Ansprüche, weiter **gekennzeichnet dadurch, dass** echtzeitkritische Kamerasteuersignale nicht an die Kamera sondern indirekt an den Synchronisationsmodul als Triggereinrichtung gesendet und dort nach Priorität gefiltert und an eine Kamera oder eine ausgewählte Gruppe von Kameras weitergeleitet werden.

9. Verfahren nach einem der vorstehenden Ansprüche, weiter **gekennzeichnet dadurch, dass** die Kamera die Bereitschaft für eine neue Bildaufnahme oder das Ende der Bilddatenübertragung als Steuersignal über das Netzwerk an das Synchronisationsmodul überträgt.

10. Verfahren nach einem der vorstehenden Ansprüche, weiter **gekennzeichnet dadurch, dass** das Synchronisationsmodul ein Signal zum Abbruch einer Bildübertragung und /oder ein weiteres Signal zur wiederholten Übertragung eines Teils eines abgebrochenen Bildes aus dem Bildspeicher einer Kamera sendet

11. Vernetztes Kamerasystem mit mehreren Bildaufnahmevorrichtungen, ausgebildet zur Durchführung des Verfahrens gemäß einem der vorstehenden Ansprüchen, umfassend ein duplexfähiges Netzwerk, an das duplexfähige Netzwerk angeschlossene hardwaregestützte Synchronisationsmodule mit einem logischen Kanal eines ersten Typs, wobei das oder die Synchronisationsmodule dazu eingerichtet sind, Bildaufnahmesignale über den logischen Kanal des ersten Typs zu versenden, die den Aufnahmezeitpunkt von Bildsensoren der Bildaufnahmevorrichtungen steuern, wobei die Bildaufnahmesignale von den Bildaufnahmevorrichtungen empfangen werden, und wobei die Bildaufnahmevorrichtungen unter Ansprechen auf den Empfang eines Bildaufnahmesignals ein Bild aufnehmen, und wobei die Bidaufnahmevorrichtungen dazu eingerichtet sind, aufgenommene Bilddaten anschließend über einen logischen Kanal eines zweiten Typs über das Netzwerk zu versenden, **dadurch gekennzeichnet, dass** die Synchronisationsmodule eine Recheneinrichtung aufweisen, welche eingerichtet ist, aus den gemessenen typischen Verzögerungszeiten von Punkt- zu Punkt-Verbindungen eine Verzögerungsmatrix zu bilden, die die Verzögerung zwischen beliebigen Triggerquellen und Kameras beschreibt, so dass nach Eintreffen eines Triggersignals diejenige Verzögerung ausgewählt wird, die ein optimales Jitter bei den Aufnahmen durch die Kameras gewährleistet.

12. Kamerasystem gemäß dem vorstehenden Anspruch, **dadurch gekennzeichnet, daß** eines oder mehrere Synchronisationsmodule Ausgänge für das Versenden oder Empfangen externer Schaltsignale aufweisen.

13. Kamerasystem gemäß einem der beiden vorstehenden Ansprüche, weiter **gekennzeichnet durch** ein Synchronisationsmodul, welches dazu eingerichtet ist, im Ansprechen auf ein empfangenes Triggersignal zumindest ein Bildaufnahmesignal über das Netzwerk zu versenden.

## Claims

1. Method of synchronising camera systems via a duplex-capable network in which within the network hardware-supported synchronisation modules having a logical channel of a first type are used, wherein the synchronisation modules transmit, via the logical channel, image-capture signals which control the capture time of image sensors, wherein the image-capture signals are received by image-capture devices, and wherein the image-capture devices each capture an image in response to the reception of an image-capture signal, and wherein the image data are then transmitted via the network, from the image-capture devices via a logical channel of a second type, **characterised in that** a delay matrix which describes the delay between any trigger sources and cameras is formed from measured typical delay times of point-to-point connections, so that upon occurrence of a trigger signal the particular delay which ensures optimum jitter when the cameras are capturing images is selected.

2. Method as claimed in the preceding claim, **characterised in that** switching signals are received or transmitted in each case via one or several outputs of a synchronisation module.

3. Method as claimed in any one of the preceding claims, further **characterised in that** a trigger signal is transmitted to a trigger input of a synchronisation module, whereupon in response to the trigger signal the synchronisation module transmits at least one image-capture signal via the network.

4. Method as claimed in any one of the preceding claims, further **characterised in that** for each data direction the synchronisation module and the camera have two logical channels which differ in accordance with their priority.

5. Method as claimed in the preceding claim, further **characterised in that** a first one of the two logical channels has a first priority for synchronisation signals, and a second channel for the transmission of image data of the two logical channels has a second priority, wherein the channel having the first priority ensures immediate transmission of information at any time and for this purpose a transmission by the second channel having the second priority can be interrupted without any delay, so that real-time capability is provided for the first channel.

6. Method as claimed in any one of the preceding claims, further **characterised in that** the synchronisation modules are equipped with a memory, in which one or several propagation times or delays between different synchronisation modules of the system and/or their variance are stored, and **in that** with knowledge of these propagation times, a delay for the image-capture is calculated and transmitted by means of a computational device.

7. Method as claimed in any one of the preceding claims, further **characterised in that** the synchronisation modules are equipped partially or completely with real-time clocks or counters which are set via a heartbeat of a host, taking into account the delay between the host and synchronisation module, and **in that** the measured clock time of the transmitting synchronisation module is transmitted in the trigger signal and evaluated in the receiver.

8. Method as claimed in any one of the preceding claims, further **characterised in that** real-time-critical camera control signals are not transmitted to the camera but are transmitted indirectly to the synchronisation module as a trigger device where they are filtered according to priority and relayed to a camera or a selected group of cameras.

9. Method as claimed in any one of the preceding claims, further **characterised in that** camera transmits the readiness for a new image-capture or the end of the image data transmission as a control signal to the synchronisation module via the network.

10. Method as claimed in any one of the preceding claims, further **characterised in that** the synchronisation module transmits a signal for interrupting an image transmission and/or a further signal for the repeated transmission of a part of an interrupted image from the image memory of a camera.

11. Networked camera system having several image-capture devices, formed for carrying out the method as claimed in any one of the preceding claims, comprising a duplex-capable network, hardware-supported synchronisation modules which are connected to the duplex-capable network and have a logical channel of a first type, wherein the synchronisation module(s) is/are arranged to transmit, via the logical channel of the first type, image-capture signals which control the capture time of image sensors of the image-capture devices, wherein the image-capture signals are received by the image-capture devices, and wherein the image-capture devices capture an image in response to the reception of an image-capture signal, and wherein the image-capture devices are arranged to subsequently transmit captured image data via a logical channel of a second type via the network, **characterised in that** the synchronisation modules comprise a computational device which is arranged to form, from the measured typical delay times of point-to-point connections, a delay matrix which describes the delay between any trigger sources and cameras, so that upon occurrence of a trigger signal the particular delay which ensures optimum jitter when the cameras are capturing images is selected.

12. Camera system as claimed in the preceding claim, **characterised in that** one or several synchronisation modules comprise outputs for transmitting or receiving external switching signals.

13. Camera system as claimed in any one of the preceding claims, further **characterised by** a synchronisation module which is arranged to transmit, in response to a received trigger signal, at least one image-capture signal via the network.

## Revendications

1. Procédé pour la synchronisation de systèmes de caméra par un réseau adapté pour le duplex, dans lequel des modules de synchronisation assistés au niveau du matériel sont utilisés à l'intérieur du réseau avec un canal logique d'un premier type, les modules de synchronisation envoyant des signaux de prise de vue par le canal logique, lesquels commandent le moment d'enregistrement de capteurs d'image, les signaux de prise de vue étant reçus par des dispositifs de prise de vue, et les dispositifs de prise de vue recevant à chaque fois une image en réaction à la réception d'un signal de prise de vue, et les données d'image étant envoyées ensuite par les dispositifs de prise de vue au moyen d'un canal logique d'un second type via le réseau, **caractérisé en ce qu'**une matrice de retard est formée à partir de temps de retard caractéristiques mesurés, laquelle décrit le retard entre des sources de déclenchement quelconques et des caméras, de sorte que le retard, qui garantit un jitter optimal lors des prises de vue par les caméras, est sélectionné après l'arrivée d'un signal de déclenchement.

2. Procédé selon la revendication précédente, **caractérisé en ce que** des signaux de commutation sont reçus ou envoyés par respectivement une ou plusieurs sorties d'un module de synchronisation.

3. Procédé selon l'une quelconque des revendications précédentes, **caractérisé** également en ce qu'un signal de déclenchement est envoyé à une entrée de déclenchement d'un module de synchronisation, après quoi le module de synchronisation envoie en réaction à ce signal au moins un signal de prise de vue via le réseau.

4. Procédé selon l'une quelconque des revendications précédentes, **caractérisé** également en ce que le module de synchronisation et la caméra possèdent pour chaque sens de données deux canaux logiques qui se différencient selon leur priorité.

5. Procédé selon la revendication précédente, **caractérisé** également en ce qu'un premier des deux canaux logiques présente une première priorité pour des signaux de synchronisation et un second canal une seconde priorité pour la transmission de données d'image des deux canaux logiques, le canal avec la première priorité garantissant la transmission d'information immédiate à tout moment et une transmission du second canal avec la seconde priorité pouvant être interrompue à cet effet sans retard, de sorte qu'une capacité d'exploitation en temps réel existe pour le premier canal.

6. Procédé selon l'une quelconque des revendications précédentes, **caractérisé** également en ce que les modules de synchronisation sont équipés d'une mémoire dans laquelle un ou plusieurs temps de transit ou retards entre différents modules de synchronisation du système et/ou leur variance sont déposés et en ce qu'un retard pour la prise de vue est calculé et transmis avec la connaissance de ces temps de transit au moyen d'un dispositif de calcul.

7. Procédé selon l'une quelconque des revendications précédentes, **caractérisé** également en ce que les modules de synchronisation sont équipés partiellement ou complètement avec des horloges en temps réel ou des compteurs, qui sont positionnés au moyen d'un battement cardiaque d'un hôte en tenant compte du retard entre l'hôte et le module de synchronisation et en ce que l'heure mesurée du module de synchronisation émetteur est transmise dans le signal de déclenchement et est analysée dans le récepteur.

8. Procédé selon l'une quelconque des revendications précédentes, **caractérisé** également en ce que des signaux de commande de caméra critiques en temps réel ne sont pas envoyés à la caméra, mais indirectement au module de synchronisation en tant que dispositif de déclenchement et sont filtrés ici selon la priorité et transmis à une caméra ou un groupe sélectionné de caméras.

9. Procédé selon l'une quelconque des revendications précédentes, **caractérisé** également en ce que la caméra transmet la disponibilité pour une nouvelle prise de vue ou la fin de la transmission de données d'image comme signal de commande via le réseau au module de synchronisation.

10. Procédé selon l'une quelconque des revendications précédentes, **caractérisé** également en ce que le module de synchronisation envoie un signal pour l'interruption d'une transmission d'image et/ou un autre signal pour la transmission répétée d'une partie d'une image interrompue provenant de la mémoire d'images d'une caméra.

11. Système de caméra interconnecté comprenant plusieurs dispositifs de prise de vue, conçu pour mettre en oeuvre le procédé selon l'une quelconque des revendications précédentes, comprenant un réseau adapté pour le duplex, des modules de synchronisation raccordés au réseau adapté pour le duplex et basés sur le matériel avec un canal logique d'un premier type, le ou les modules de synchronisation étant conçu(s) pour envoyer des signaux de prise de vue par le canal logique du premier type, qui commandent le moment de prise de vue de capteurs d'image des dispositifs de prise de vue, les signaux d'enregistrement d'image étant reçus par les dispositifs de prise de vue, et les dispositifs de prise de vue enregistrant une image en réaction à la réception d'un signal d'enregistrement d'image, et les dispositifs de prise de vue étant conçus pour envoyer des données d'image enregistrées ensuite au moyen d'un canal logique d'un second type via le réseau, **caractérisé en ce que** les modules de synchronisation présentent un dispositif de calcul qui est conçu pour former à partir des retards caractéristiques mesurés de liaisons de point à point une matrice de retard qui décrit le retard entre des sources de déclenchement quelconques et des caméras, de sorte que, après l'arrivée d'un signal de déclenchement, on choisit le retard qui garantit un jitter optimal lors des prises de vue par les caméras.

12. Système de caméra selon la revendication précédente, **caractérisé en ce qu'**un ou plusieurs modules de synchronisation présentent des sorties pour l'envoi ou la réception de signaux de commutation externes.

13. Système de caméra selon l'une quelconque des deux revendications précédentes, **caractérisé** également par un module de synchronisation, qui est conçu pour envoyer au moins un signal de prise de vue via le réseau en réaction à un signal de déclenchement reçu.
